# EUROPEAN PATENT SPECIFICATION

(11) **EP 3 889 462 B1**
(45) Date of publication and mention of the grant of the patent: **04.03.2026**
(21) Application number: 21163911.7
(22) Date of filing: 22.03.2021
(51) Int. Cl.: F16H 1/32, G01D 5/12, H02K 11/21, H02K 7/116

(54) **GEAR MOTOR**
GETRIEBEMOTOR
MOTEUR À ENGRENAGES

(30) Priority: 30.03.2020 JP 2020060169
(43) Date of publication of application: 06.10.2021
(73) Proprietor: Sumitomo Heavy Industries, Ltd., Tokyo 141-6025 (JP)
(72) Inventor: TOKUNAGA, Shinya, Kanagawa, 237-8555, (JP)
(74) Representative: Walcher, Armin

(56) References cited:
- WO-A1-2012/050130
- WO-A1-2019/065007
- DE-A1- 102018 125 616
- DE-A1- 19 546 180

## Description

### BACKGROUND OF THE INVENTION

### Field of the Invention

The present invention relates to a gear motor in which a reduction gear and a motor are connected to each other.

### Description of Related Art

There is a request to mount a first detector, which detects the rotation of a motor shaft, and a second detector, which detects the rotation of an output shaft, on a gear motor in which a motor and a reduction gear are connected to each other side by side in the axial direction of the motor shaft. Since a mating member, which outputs decelerated rotation, is attached to the motor opposite side of the reduction gear, it is difficult to ensure a space in which the first detector and the second detector are to be attached in the gear motor.

For this reason, in the gear motor in the related art, the motor shaft is formed of a hollow shaft, the output shaft of the reduction gear is caused to pass through the inside of the motor shaft, and the first detector for detecting the rotation of the motor shaft and the second detector for detecting the rotation of the output shaft are disposed on one side of the motor of the gear motor opposite to the reduction gear (for example, see WO2012/050130). International Patent Publication No. WO2019/065007 which forms the basis for the two part form of claim 1, discloses an electric actuator which includes a motor with a motor shaft extending along a central axis, a speed reducer connected to the motor shaft, an output shaft portion including an output shaft portion, and a rotation detector to detect rotation of the output portion, as well as a second rotation detector to detect rotation of the motor shaft.

### SUMMARY OF THE INVENTION

However, there is a problem that the gear motor in the related art has a complicated structure.

An object of the invention is to simplify the structure of a gear motor.

This object is achieved by a gear motor according to claim 1.

Preferred embodiments are laid down in the dependent claims.

According to the invention, it is possible to simplify the structure of a gear motor.

### BRIEF DESCRIPTION OF THE DRAWINGS

Fig. 1 is a cross-sectional view of a gear motor according to a first embodiment of the invention.
Fig. 2 is a cross-sectional view of a gear motor according to a second embodiment of the invention.
Fig. 3 is a cross-sectional view of a gear motor according to a third embodiment of the invention.
Fig. 4 is a cross-sectional view of a gear motor to which sealing members for allowing a lubricant to be sealed in a space in which a reduction mechanism is disposed are added.

### DETAILED DESCRIPTION OF THE INVENTION

### [First embodiment]

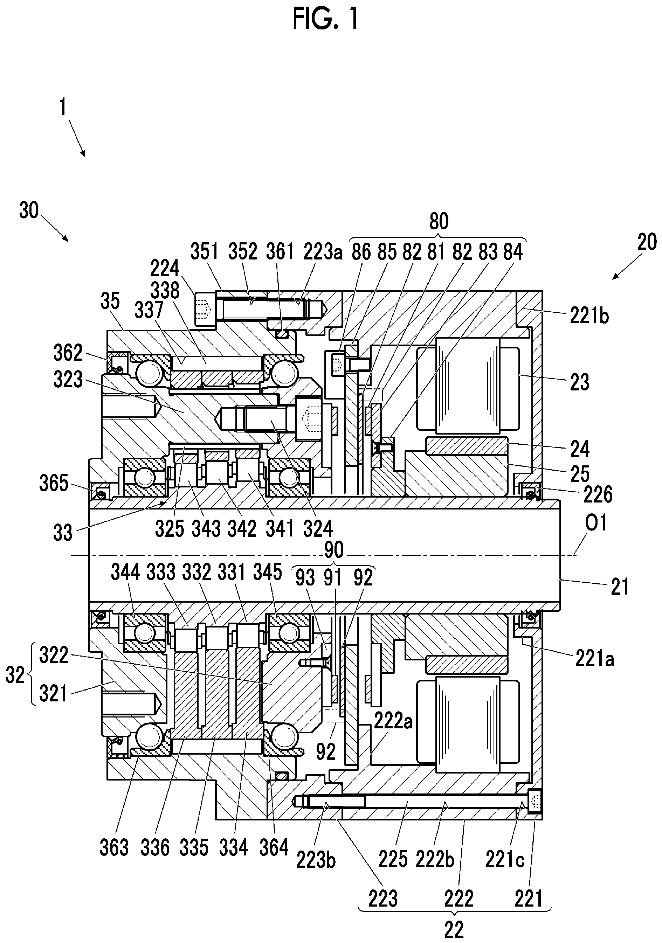

A first embodiment of the invention will be described in detail below with reference to a drawing. Fig. 1 is a cross-sectional view of a gear motor 1 according to the first embodiment of the invention.

### [Schematic configuration of gear motor]

The gear motor 1 according to this embodiment includes a motor 20, a reduction gear 30, and a first detection unit 80 that detects the rotation of the motor 20, and a second detection unit 90 that detects the output rotation of the reduction gear 30; and has a structure where the motor 20 and the reduction gear 30 are connected to each other side by side along a motor shaft 21 of the motor 20. In the following description, a direction along a center axis O1 of the motor shaft 21 will be referred to as an axial direction, a radial direction of the center axis O1 will be referred to as a radial direction, and a rotation direction centered on the center axis O1 will be referred to as a circumferential direction. Further, a side (a right side in Fig. 1) of the reduction gear 30 in the axial direction of the center axis O1 on which the motor 20 is present is referred to as a motor side and a side (a left side in Fig. 1) opposite thereto is referred to as a motor opposite side. Furthermore, in a case where a side of each component is referred to as a "motor side", the side represents the right side in Fig. 1 regardless of whether the actual motor 20 is present on the right or left side of the component. In a case where a side of each component is referred to as a "motor opposite side", the side represents the left side in Fig. 1 (The same applies to gear motors 1A and 1B to be described later).

### [Motor]

The motor 20 includes a motor shaft 21, a motor casing 22, a stator core 23, a hollow cylindrical rotor core 24, and a support sleeve 25 that supports the rotor core 24.

The motor shaft 21 extends substantially over the entire length of the gear motor 1 in the axial direction at the central portion of the gear motor 1, and is rotatably supported by motor shaft bearings 344 and 345 of the reduction gear 30. The motor shaft 21 has a hollow structure (a hollow cylindrical shape), but may be a solid shaft.

The rotor core 24 is formed of a permanent magnet. The outer periphery of the support sleeve 25 is fitted to the inside of the rotor core 24 by press-fit, so that the rotor core 24 is fixedly connected to the support sleeve 25.

The support sleeve 25 has a cylindrical shape and the motor shaft 21 is fitted to the inside of the support sleeve 25 by press-fit, so that the support sleeve 25 is fixedly connected to the motor shaft 21.

The stator core 23 is formed of an electromagnet that includes a stator core body and a coil wound around the stator core body. The stator core 23 is press-fitted and fixed to the inner periphery of a second member 222 of the motor casing 22 to be described later.

The motor casing 22 includes disc-shaped or cylindrical first to third members 221 to 223 that are connected to each other.

The first member 221 covers the periphery of a motor-side end portion of the motor shaft **21.** Cylindrical portions 221a and 221b extending toward the motor opposite side are formed at the central portion and the outer periphery of the first member 221.

A protruding stripe protruding inward in the radial direction is formed over the entire circumference on the inner periphery of an opposite motor-side end portion of the cylindrical portion 221a. Further, the motor-side end portion of the motor shaft 21 is loosely inserted into the cylindrical portion 221a, and an oil seal 226 is provided between the cylindrical portion 221a and the motor shaft **21.**

A reduced-diameter step portion formed at a motor-side end portion of the second member 222 is fitted (spigot-fitted) to the cylindrical portion 221b. Accordingly, the first member 221 and the second member 222 are coupled to each other.

A step portion is formed on the inner periphery of the second member 222 at an intermediate position in the axial direction, and the inner diameter of an opposite motor-side portion of the second member 222 becomes smaller than the inner diameter of the motor-side portion of the second member 222 from the step portion. The above-mentioned stator core 23 is inserted up to the step portion from the motor-side end portion of the second member 222 by the press-fit of the second member 222.

Further, a support wall 222a extending inward (toward the center axis O1) in the radial direction is formed over the entire circumference near the opposite motor-side end portion of the inner periphery of the second member 222. A substrate 85 shared by the first detection unit 80 and the second detection unit 90 to be described later is fixedly attached to the support wall 222a by screwing.

A reduced-diameter step portion formed at an opposite motor-side end portion of the second member 222 is press-fitted (spigot-fitted) to a motor-side end portion of the third member 223. Accordingly, the second member 222 and the third member 223 are coupled to each other.

Further, a motor-side end portion of a housing 35 of the reduction gear 30 is fitted to the inside of an opposite motor-side end portion of the third member 223, and the opposite motor-side end portion of the third member 223 is in contact with a flange portion 351 formed on the outer periphery of the housing 35.

Bolt insertion holes 352 as connecting holes are formed so as to penetrate the flange portion 351 in the axial direction at a plurality of positions arranged at regular intervals in the circumferential direction. On the other hand, screw holes 223a are formed on an opposite motor-side end surface of the third member 223 while being disposed so as to coincide with the plurality of bolt insertion holes 352 in the circumferential direction (only one screw hole 223a is shown in Fig. 1).

Further, a plurality of bolts 224 are screwed into the screw holes 223a through the bolt insertion holes 352 of the flange portion 351, so that the housing 35 and the third member 223 are connected to each other.

An O-ring 361 is housed in a ring groove formed on the outer periphery of the housing 35 facing the inner periphery of the third member 223 to allow a lubricant to be sealed in the housing 35.

O-rings may be interposed even between the first and second members 221 and 222 of the motor casing 22 and between the second and third members 222 and 223 so that a lubricant can be sealed in the motor casing 22.

Bolt insertion holes 221c and 222b as connecting holes having the same inner diameter are formed in the respective first and second members 221 and 222 at a plurality of positions arranged at regular intervals in the circumferential direction so as to penetrate the first and second members 221 and 222 in the axial direction while being disposed so as to coincide with each other (only one bolt insertion hole 221c and one bolt insertion hole 222b are shown in Fig. 1). Further, a counterbored hole in which the head of a bolt is received is formed on the motor side of each of the bolt insertion holes 221c of the first member 221.

Further, screw holes 223b are formed on the motor-side end surface of the thirdmember 223 at apluralityof positions arranged at regular intervals in the circumferential direction while being disposed so as to coincide with the bolt insertion holes 221c and 222b in the circumferential direction (only one screw hole 223b is shown in Fig. 1).

Furthermore, a plurality of bolts 225 are screwed into the screw holes 223b through the bolt insertion holes 221c and 222b, so that the first to third members 221 to 223 are integrally connected by the fastening of the bolts 225.

### [Reduction gear]

The reduction gear 30 is a so-called center crank type eccentric oscillating reduction gear.

As shown in Fig. 1, the reduction gear 30 includes a carrier member 32, a reduction mechanism 33, and the housing (casing) 35 that covers the periphery of the carrier member 32 and the reduction mechanism 33. The housing 35 is connected to the motor casing 22 as described above, and the carrier member 32 is connected to a mating member (not shown) that transmits decelerated rotation.

The reduction mechanism 33 uses the motor shaft 21, which is provided to penetrate the reduction gear 30 in the axial direction, as an eccentric body shaft, and includes a plurality of eccentric bodies 331, 332, and 333 that are provided on the motor shaft 21 and a plurality of external gears 334, 335, and 336 that oscillate due to the rotation of the eccentric bodies 331, 332, and 333. Each of the external gears 334, 335, and 336 includes a plurality of inner pin holes that are provided at positions offset from the center so as to be spaced from each other in the circumferential direction, and a central through-hole through which the motor shaft 21 passes. An input shaft (eccentric body shaft) of the reduction mechanism 33 may be formed separately from the motor shaft 21 without being formed integrally with the motor shaft 21 and may be connected to the motor shaft 21 by a coupling or the like.

The reduction mechanism 33 further includes an internal gear 337 that is provided on the inner peripheral portion of the housing 35. The internal gear 337 includes an internal gear main body that includes a plurality of outer pins 338 serving as internal teeth and a plurality of pin grooves holding the plurality of outer pins 338, and internally meshes with the external gears 334, 335, and 336.

In addition, the reduction mechanism 33 includes eccentric body bearings 341, 342, and 343. The eccentric body bearings 341, 342, and 343 are disposed between the eccentric bodies 331, 332, and 333 and the external gears 334, 335, and 336, respectively and allow the eccentric bodies and the external gears to be rotatable relative to each other.

The carrier member 32 includes a first carrier member 321 that is provided on the motor opposite side of the external gears 334, 335, and 336 (reduction mechanism) and a second carrier member 322 that is provided on the motor side of the external gears 334, 335, and 336 (reduction mechanism). The first and second carrier members 321 and 322 are connected to each other by a plurality of inner pins 323 that are provided integrally with the first carrier member 321 around the motor shaft 21 and a plurality of bolts 324 that penetrate the second carrier member 322. Further, a cylindrical inner roller 325 is rotatably fitted to the outer periphery of each inner pin 323. Furthermore, the respective inner pins 323 are loosely inserted into the inner pin holes of the respective external gears 334, 335, and 336 through the inner rollers 325.

Further, the first and second carrier members 321 and 322 are rotatably supported by the housing 35 through main bearings 363 and 364 that are formed of angular ball bearings, respectively. The main bearings 363 and 364 are not limited to angular ball bearings and other bearings may be used.

Furthermore, a motor shaft bearing 344 is provided between the first carrier member 321 and the motor shaft 21, and a motor shaft bearing 345 is provided between the second carrier member 322 and the motor shaft 21. The motor shaft bearing 344 allows the motor shaft 21 and the first carrier member 321 to be rotatable relative to each other, and the motor shaft bearing 345 allows the motor shaft 21 and the second carrier member 322 to be rotatable relative to each other.

An oil seal 362, which allows a lubricant to be sealed in the reduction gear 30, is provided between the first carrier member 321 and the housing 35. Further, an oil seal 365, which allows a lubricant to be sealed in the reduction gear 30, is provided even between the first carrier member 321 and the motor shaft 21.

### [Detection unit]

The first detection unit 80 and the second detection unit 90 are disposed between the motor 20 and the second carrier member 322 of the reduction gear 30 so as to be adjacent to each other. The first detection unit 80 is disposed on the motor side of the second detection unit 90. Here, in the gear motor 1 according to this embodiment, the motor 20 and the reduction gear 30 are designed as an integrated device and a cover member or the like for clearly partitioning the motor 20 and the reduction gear 30 is not provided. In this case, in a case where an element is disposed between a stator (stator core 23), which is one of main components of the motor 20, and the second carrier member 322, this corresponds to "an element is disposed between the motor and the second carrier member".

The first detection unit 80 includes a first detection target portion 81 that rotates integrally with the motor shaft 21 and a first sensor part 82 that is disposed near the first detection target portion 81 and detects the first detection target portion 81.

The second detection unit 90 includes a second detection target portion 91 that rotates integrally with the second carrier member 322 and a second sensor part 92 that is disposed near the second detection target portion 91 and detects the second detection target portion 91.

For example, a rotary encoder, which outputs the rotational displacement of a rotating part as a digital signal, is exemplified as each of the first and second detection units 80 and 90, but each of the first and second detection units 80 and 90 may be a resolver, which outputs the rotational displacement of a rotating part as an analog signal, or other rotation detectors. The rotary encoder may include an optical detection part, or may include a magnetic detection part. Further, the first and second detection units 80 and 90 may be different types of detectors.

The first detection target portion 81 is provided on a disc 83 (or a ring) that is disposed on the motor opposite side of the support sleeve 25 of the motor 20. The disc 83 is supported concentrically with the motor shaft 21 by a cylindrical support body 84 that is fixedly mounted on the outer periphery of the motor shaft 21, and rotates about the center axis O1 together with the motor shaft 21.

For example, optically or magnetically readable codes are formed in the first detection target portion 81 along the circumference centered on the center axis O1 in a plane of the disc 83 perpendicular to the axis. Further, in a case where the first detection target portion 81 is formed on a ring, these codes may be formed on the outer periphery of the ring.

The first sensor part 82 is provided on the substrate 85 that is fixedly mounted on the support wall 222a of the second member 222 of the above-mentioned motor casing 22 with bolts. The substrate 85 is a flat plate that is disposed around the motor shaft 21 in a state where the motor shaft 21 is loosely inserted into a through-hole formed at a central portion of the substrate 85, and is disposed on the motor opposite side of the first detection target portion 81. That is, the first sensor part 82 detects the first detection target portion 81, which rotates integrally with the motor shaft 21, in a state where the first sensor part 82 is supported on the motor casing 22 rotating relative to the motor shaft 21.

The first sensor part 82 is disposed on the motor-side flat surface of the substrate 85 so as to be close to and face the first detection target portion 81. The first sensor part 82 is formed of, for example, an optical sensor or a magnetic sensor that can read the codes of the first detection target portion 81.

In the above-mentioned example, the first detection target portion 81 and the first sensor part 82 are disposed so as to face each other in the axial direction. However, in a case where the codes of the first detection target portion 81 are formed on the outer periphery of the ring, the first sensor part 82 may be disposed outside the first detection target portion 81 in the radial direction as shown by a two-dot chain line and the first detection target portion 81 and the first sensor part 82 may be disposed so as to face each other in the radial direction.

The second detection target portion 91 is provided on a disc 93 (or a ring) that is disposed on the motor side of the second carrier member 322 of the reduction gear 30. The disc 93 is fixedly mounted on the motor-side end surface of the second carrier member 322 by screwing, and rotates about the center axis O1 concentrically and integrally with the second carrier member 322.

For example, optically or magnetically readable codes are also formed in the second detection target portion 91 along the circumference centered on the center axis O1 in a plane of the disc 93. Further, in a case where the second detection target portion 91 is formed on a ring, these codes may be formed on the outer periphery of the ring.

The second sensor part 92 is provided on the opposite motor-side flat surface of the above-mentioned substrate 85. The second sensor part 92 also detects the second detection target portion 91, which rotates integrally with the second carrier member 322, in a state where the second sensor part 92 is fixed to the motor casing 22 rotating relative to the second carrier member 322.

The second sensor part 92 is disposed on the opposite motor-side flat surface of the substrate 85 so as to be close to and face the second detection target portion 91. The second sensor part 92 is formed of, for example, an optical sensor or a magnetic sensor that can read the codes of the second detection target portion 91. In this embodiment, the first sensor part 82 is disposed on one end surface (motor-side end surface) of the substrate 85 in the axial direction and the second sensor part 92 is disposed on the other end surface (opposite motor-side end surface) thereof in the axial direction. That is, the first sensor part 82 and the second sensor part 92 are disposed on the back surface and the front surface of the substrate 85, respectively. However, the invention is not limited thereto, and for example, the first sensor part 82 and the second sensor part 92 may be disposed on the same surface of the substrate 85, or may be disposed on surfaces, which face each other, other than the axial end surfaces, for example, the back surface and the front surface of the peripheral surface facing each other in the radial direction.

In the above-mentioned example, the second detection target portion 91 and the second sensor part 92 are disposed so as to face each other in the axial direction. However, in a case where the codes of the second detection target portion 91 are formed on the outer periphery of the ring, the second sensor part 92 may also be disposed outside the second detection target portion 91 in the radial direction as shown by a two-dot chain line and the second detection target portion 91 and the second sensor part 92 may be disposed so as to face each other in the radial direction.

A state where the second sensor part 92 is disposed on the substrate 85 so as to be opposite to the first sensor part 82 in the circumferential direction is shown, but the second sensor part 92 may be disposed so as to be closer to or coincide with the first sensor part 82 in the circumferential direction.

The substrate 85 is provided with a processing part 86 that processes both the detection information of the first sensor part 82 and the detection information of the second sensor part 92. The processing part 86 is formed of, for example, a chip part including a processing circuit to which the detection signals of the first and second sensor parts 82 and 92 are input and which generates a detection information signal capable of being output to an external device and outputs the detection information signal to the external device.

### [Description of operation]

According to this configuration, in a case where the motor 20 of the gear motor 1 is driven, the eccentric bodies 331, 332, and 333 are rotated in the central through-holes of the external gears 334, 335, and 336 due to the rotation of the motor shaft 21 in the reduction gear 30. Accordingly, the external gears 334, 335, and 336 oscillate with phases different from each other. The external teeth of the external gears 334, 335, and 336 farthest from the axial center of the motor shaft 21 mesh with the internal gear 337 due to the oscillation, and the meshing positions of the external teeth are changed in the circumferential direction with the oscillation. Specifically, whenever the motor shaft 21 makes one rotation, the meshing positions where the internal gear 337 meshes with the external gears 334, 335, and 336 go around in the circumferential direction. Since there is a difference in the number of teeth between each of the external gears 334, 335, and 336 and the internal gear 337, each of the external gears 334, 335, and 336 is rotated by the difference in the number of teeth whenever the meshing position where the internal gear 337 meshes with each external gear goes around. This rotation is transmitted to the carrier member 32 through the inner pins 323. Accordingly, the rotating motion of the motor shaft 21 is decelerated and is taken out of the carrier member 32.

During the rotating motion, the rotation position of the motor shaft 21 is detected by the first sensor part 82 that reads the codes of the first detection target portion 81 rotating together with the motor shaft 21 from the substrate 85.

Further, the rotation position of the carrier member 32 is detected by the second sensor part 92 that reads the codes of the second detection target portion 91 rotating together with the second carrier member 322 from the substrate 85.

### [Technical effects]

Since the first detection unit 80, which detects the rotation of the motor 20, and the second detection unit 90, which detects the rotation of the carrier member 32, of the gear motor 1 are disposed between the motor 20 and the second carrier member 322 as described above, the first and second detection units 80 and 90 can be disposed near the motor shaft 21 and the second carrier member 322 serving as objects to be detected.

Accordingly, since a need for a complicated transmission structure in which the motor shaft 21 is formed to be hollow and a rotation operation is transmitted to a distant detection unit through a transmission shaft provided in the motor shaft 21 is eliminated, the structure of the gear motor 1 can be simplified.

Further, in a case where the motor shaft 21 is formed to be hollow, the inside of the motor shaft 21 can be used for purposes other than the transmission of a detection operation. Furthermore, since it is not essential that the motor shaft 21 is formed of a hollow shaft, the size and weight of the gear motor 1 can also be reduced using a solid shaft as the motor shaft 21.

Moreover, since both the first and second detection units 80 and 90 are disposed between the motor 20 and the second carrier member 322, a space can be saved and the size of the gear motor 1 can be reduced through concentrated disposition in comparison with a case where the first and second detection units 80 and 90 are disposed to be distributed.

Further, the internal structure of the motor casing 22 and the housing 35, which are the casing of the gear motor 1, can be simplified in comparison with a case where the first and second detection units 80 and 90 are disposed to be distributed.

Furthermore, since the first detection unit 80 includes the first detection target portion 81 that rotates integrally with the motor shaft 21 and the first sensor part 82 that is fixed to the substrate 85 rotating relative to the motor shaft 21, the rotation position of the motor 20 can be directly detected from the motor shaft 21. Accordingly, more accurate detection can be performed.

Likewise, since the second detection unit 90 includes the second detection target portion 91 that rotates integrally with the second carrier member 322 and the second sensor part 92 that is fixed to the substrate 85 rotating relative to the second carrier member 322, the rotation position of the carrier member 32 can be directly detected. Accordingly, more accurate detection can be performed.

In addition, since the first and second sensor parts 82 and 92 are disposed on the same substrate 85, the configuration of the first and second detection units 80 and 90 can be easily simplified and spaces for these first and second detection units 80 and 90 can be saved.

Further, since the first and second sensor parts 82 and 92 are disposed on the same substrate 85, the power supply path and signal transmission path of the respective sensor parts 82 and 92 can be integrated. Accordingly, the configuration of a circuit, the wiring connected to the circuit, and the like can be simplified.

Furthermore, since the first and second sensor parts 82 and 92 are disposed on the back surface (the motor-side surface) and the front surface (the opposite motor-side surface) of the substrate 85, respectively, both surfaces of the substrate 85 are used. Accordingly, a space can be saved. Moreover, the size of the substrate 85 can be reduced.

In addition, since the first and second sensor parts 82 and 92 are disposed on the same substrate 85, it is possible to easily achieve a configuration where both the detection information of the first sensor part 82 and the detection information of the second sensor part 92 are processed by one processing part 86. Further, since one processing part 86 is used for the first and second sensor parts 82 and 92, the number of components of the processing part 86 can be reduced. Accordingly, the saving of a space and a reduction in costs, which are caused by a reduction in the number of components, can be achieved.

### [Second embodiment]

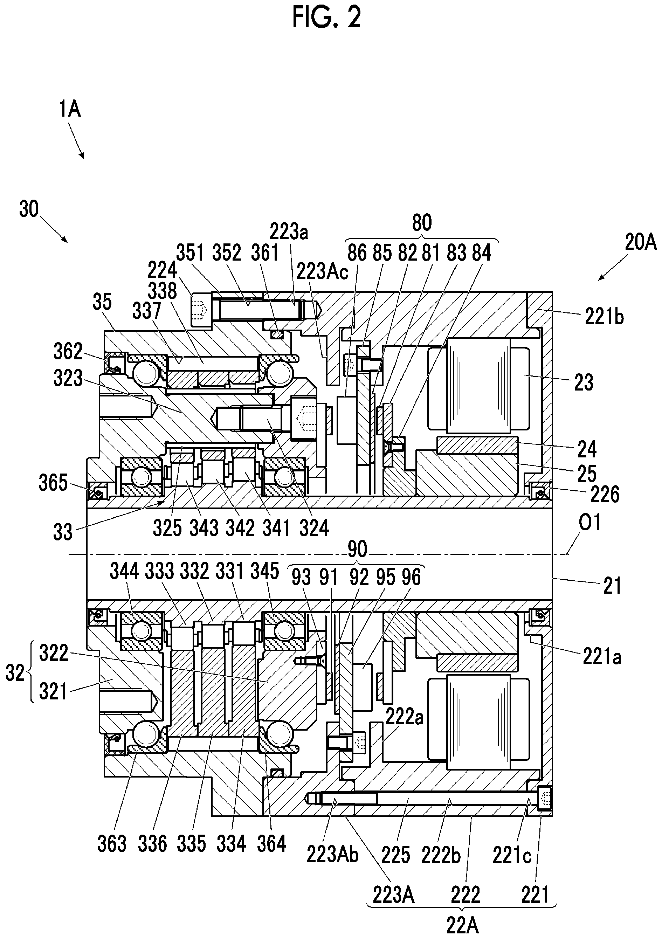

A second embodiment of the invention will be described in detail with reference to a drawing. Fig. 2 is a cross-sectional view of a gear motor 1A according to the second embodiment.

Components of the gear motor 1A corresponding to the components of the above-mentioned gear motor 1 will be denoted by the same reference numerals as those of the gear motor 1. Further, the detailed description of components, which have minor changes from the dimensions and shapes of the corresponding components of the gear motor 1 but have the same functions and actions as those of the corresponding components of the gear motor 1, will be omitted and only differences from the gear motor 1 will be described.

Since the disposition and support structure of the first and second detection units 80 and 90 are changed in the gear motor 1A, a motor casing 22A of a motor 20A is changed.

A configuration where the first and second sensor parts 82 and 92 are disposed on one substrate 85 has been exemplified in the above-mentioned gear motor 1. However, in the gear motor 1A, a first sensor part 82 is provided on a substrate 85 and a second sensor part 92 is provided on another substrate 95.

Further, since the first and second sensor parts 82 and 92 are provided on the separate substrates 85 and 95, respectively, a processing part 86 for processing the detection information of the first sensor part 82 and a processing part 96 for processing the detection information of the second sensor part 92 are prepared and these processing parts 86 and 96 are separately provided on the substrates 85 and 95.

The configuration (including the substrate 85 and the processing part 86) of the first detection unit 80 and the disposition thereof are substantially the same as those of the above-mentioned gear motor 1. However, the substrate 85 is reduced in size and is disposed only on one side (the upper side in Fig. 2) of the motor shaft 21 in the radial direction.

On the other hand, the substrate 95 of the second detection unit 90 is disposed on one side of the motor shaft 21 opposite to the substrate 85 in the radial direction, and is disposed slightly closer to the motor opposite side than the substrate 85. The substrate 95 is fixedly attached to a support wall 223Ac, which extends inward (toward the center axis O1) in the radial direction from the inner periphery of a third member 223A of a motor casing 22A, by screwing.

Screw holes 223Ab are formed in the third member 223A of the motor casing 22A and the third member 223A is integrally connected to first and second members 221 and 222 by bolts 225.

Further, the second sensor part 92 is disposed on the opposite motor-side surface of the substrate 95 so as to be close to and face the second detection target portion 91 and be capable of reading codes.

Furthermore, the processing part 96 is provided on the motor-side surface of the substrate 95. The processing part 96 is formed of, for example, a chip part including a processing circuit to which the detection signal of the second sensor part 92 is input and which generates a detection information signal capable of being output to an external device and outputs the detection information signal to the external device.

The gear motor 1A can also obtain the same effects as the gear motor 1 except for effects caused by the sharing of the substrate 85 and the sharing of the processing part 86 between the first and second detection units 80 and 90.

In addition, the gear motor 1A has a configuration where the first and second detection units 80 and 90 individually include the substrates 85 and 95. However, since one substrate is not shared, the degree of freedom in the disposition of the first detection target portion 81, the first sensor part 82, the second detection target portion 91, and the second sensor part 92 can be secured. Accordingly, an extra gap space and the like formed in the gear motor 1A can be used.

### [Third embodiment]

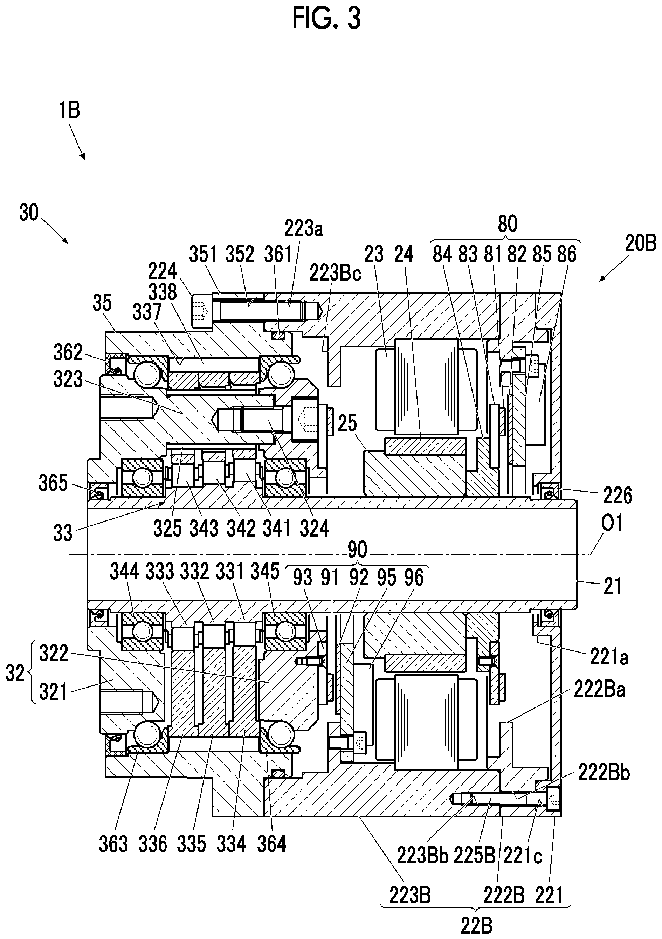

A third embodiment of the invention will be described in detail with reference to a drawing. Fig. 3 is a cross-sectional view of a gear motor 1B according to the third embodiment.

Components of the gear motor 1B corresponding to the components of the above-mentioned gear motors 1 and 1A will be denoted by the same reference numerals as those of the gear motors 1 and 1A. Further, the detailed description of components, which have minor changes from the dimensions and shapes of the corresponding components of the gear motors 1 and 1A but have the same functions and actions as those of the corresponding components of the gear motors 1 and 1A, will be omitted and only differences from the gear motors 1 and 1A will be described.

Since the disposition and support structure of the first and second detection units 80 and 90 are changed in the gear motor 1B, a motor casing 22B of a motor 20B is changed.

A configuration where the first and second sensor parts 82 and 92 are disposed on one substrate 85 has been exemplified in the above-mentioned gear motor 1. However, in the gear motor 1B, a first sensor part 82 is provided on a substrate 85 and a second sensor part 92 is provided on another substrate 95.

Further, since the first and second sensor parts 82 and 92 are provided on the separate substrates 85 and 95, respectively, a processing part 86 for processing the detection information of the first sensor part 82 and a processing part 96 for processing the detection information of the second sensor part 92 are prepared and these processing parts 86 and 96 are separately provided on the substrates 85 and 95.

Furthermore, in the gear motor 1B, the second detection unit 90 is disposed between the motor 20B and the second carrier member 322 and the first detection unit 80 is disposed on the motor side of the motor 20B (the right side in Fig. 3, the rear end portion of the motor shaft 21).

In the gear motor 1B, a third member 223B of the motor casing 22B closest to the motor opposite side (the left side in Fig. 3) supports the stator core 23 and the second detection unit 90 and a second member 222B disposed between the first member 221 and the third member 223B supports the first detection unit 80.

A support wall 223Bc extending inward (toward the center axis O1) in the radial direction from the inner periphery of the third member 223B is provided on the third member 223B at a position near the second carrier member 322 on the motor side of the second carrier member 322. Further, the substrate 95 of the second detection unit 90 is fixedly attached to the support wall 223Bc by screwing.

The disposition of the second sensor part 92 and the processing part 96 and the disposition of the second detection target portion 91 with respect to the substrate 95 are the same as those of the gear motor 1A.

Further, a support body 84 is fixedly mounted on the outer periphery of the motor shaft 21 on the motor side of the rotor core 24 and the support sleeve 25, and a disc 83 (or a ring) is attached to the motor side of the support body 84.

The first detection target portion 81 of the first detection unit 80 is formed on the flat surface of the disc 83.

The second member 222B of the motor casing 22B is provided with a support wall 222Ba that extends inward (toward the center axis O1) in the radial direction from the inner periphery thereof. Further, the substrate 85 of the first detection unit 80 is fixedly attached to the support wall 222Ba by screwing. The substrate 85 is disposed on the motor side of the disc 83, and the first sensor part 82 is disposed on the opposite motor-side surface of the substrate 85 so as to be close to and face the first detection target portion 81 and be capable of reading codes. Furthermore, the processing part 86 is provided on the motor-side surface of the substrate 85.

Bolt insertion holes 222Bb are formed in the second member 222B of the motor casing 22B, screw holes 223Bb are formed in the third member 223B, and the first to third members 221 to 223 are integrally connected by bolts 225B.

The gear motor 1B can also obtain the same effects as the gear motor 1 except for effects obtained in a case where the first and second detection units 80 and 90 are disposed to be concentrated and effects caused by the sharing of the substrate 85 and of the processing part 86 between the first and second detection units 80 and 90. For example, since the second detection unit 90 is disposed between the motor 20B and the second carrier member 322, a structure can be simplified.

In addition, since the first and second detection units 80 and 90 do not share one substrate in the gear motor 1B, the degree of freedom in the disposition of the first detection target portion 81, the first sensor part 82, the second detection target portion 91, and the second sensor part 92 can be secured. In particularly, since the first detection unit 80 is disposed on the motor side of the motor 20B in the gear motor 1B, an extra gap space and the like formed in the gear motor 1B can be further used.

### [Other]

The embodiments of the invention have been described above. However, the invention is not limited to the embodiments.

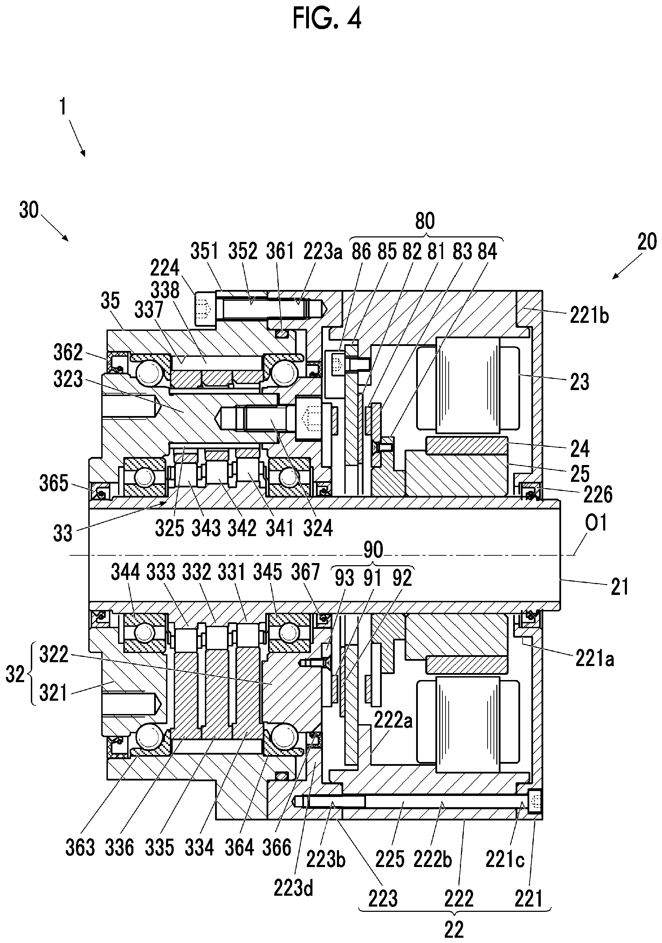

Fig. 4 shows an example where the gear motor 1 is provided with oil seals 366 and 367 as sealing members for sealing between a space in which the second detection unit 90 is disposed and a space in which the reduction mechanism 33 is disposed.

The space in which the second detection unit 90 of the gear motor 1 is disposed is, for example, an internal space of the motor casing 22 and the housing 35 and is a space between the stator core 23 and the rotor core 24 and the carrier member 32 and the reduction mechanism 33.

The space in which the reduction mechanism 33 of the gear motor 1 is disposed is, for example, an internal space of the housing 35.

A partition wall 223d extending inward (toward the center axis O1) in the radial direction from the entire inner periphery of the third member 223 of the motor casing 22 is provided in the gear motor 1 shown in Fig. 4 so that a lubricant supplied to the carrier member 32 or the reduction mechanism 33 of the reduction gear 30 is not moved to the space in which the second detection unit 90 is disposed.

Further, the oil seal 366 is disposed between the inner periphery of the partition wall 223d and the outer periphery of the second carrier member 322.

Furthermore, the oil seal 367 is disposed even between the outer periphery of the motor shaft 21 and the inner periphery of the second carrier member 322 on the motor side of the motor shaft bearing 345.

According to this configuration, it is possible to inhibit a lubricant, which is supplied to the carrier member 32 or the reduction mechanism 33 of the reduction gear 30, from being moved to the space in which the second detection unit 90 is disposed.

Accordingly, even in a case where a detection device, such as an optical encoder, easily affected by dirt, such as oil or dust, is used as the second detection unit 90 or the first detection unit 80, an influence of a lubricant is suppressed and a good detection can be performed.

The example where the gear motor 1 is provided with the oil seals 366 and 367 as sealing members has been shown in Fig. 4, but the same configuration can also be applied to the gear motors 1A and 1B.

Further, in the respective embodiments, a center crank type eccentric oscillating reduction gear has been exemplified as the reduction gear 30 of each of the gear motors 1, 1A, and 1B. However, the reduction gear 30 is not limited thereto and various reduction mechanisms can be employed. For example, a sorting type eccentric oscillating reduction gear, a simple planetary gear device, a traction drive type reduction mechanism including no gear, and the like may be applied as examples of the reduction gear.

In addition, the details shown in the embodiments can be appropriately changed without departing from the scope of the invention, as defined by the appended claims.

### Brief Description of the Reference Symbols

1, 1A, 1B: gear motor
20, 20A, 20B: motor
21: motor shaft
22, 22A, 22B: motor casing
23: stator core
24: rotor core
30: reduction gear
32: carrier member
321: first carrier member
322: second carrier member
33: reduction mechanism
35: housing (casing)
80: first detection unit
81: first detection target portion
82: first sensor part
83: disc
85: substrate
86: processing part
90: second detection unit
91: second detection target portion
92: second sensor part
93: disc
95: substrate
96: processing part
361: O-ring
226, 362, 365, 366, 367: oil seal (sealing member)
O1: center axis

## Claims

1. A gear motor (1, 1A, 1B) comprising:
a motor (20, 20A, 20B); and
a reduction gear (30),
wherein the reduction gear (30) includes a reduction mechanism (33) and a carrier member (32) to which rotation decelerated by the reduction mechanism (33) is transmitted,
the carrier member (32) includes a first carrier member (321) that is disposed on a motor opposite side of the reduction mechanism (33), and a second carrier member (322) that is disposed on a motor side of the reduction mechanism (33) and is connected to the first carrier member (321),
the gear motor (1, 1A, 1B) includes a first detection unit (80) that detects a rotation of the motor (20, 20A, 20B) and a second detection unit (90) that detects a rotation of the carrier member (32), and
the second detection unit (90) is disposed between the motor (20, 20A, 20B) and the second carrier member (322),
**characterized in that**
the first detection unit (80) includes a first detection target portion (81) that rotates integrally with a motor shaft (21), and a first sensor part (82) that is fixed to a member (222) fixedly connected to a motor casing (22) of the motor (20, 20A, 20B) and detects the first detection target portion (81), and
the first target portion (81) and the first sensor part (82) are disposed between the motor (20, 20A, 20B) and the second carrier member (322), and
the second detection unit (90) includes a second detection target portion (91) that rotates integrally with the second carrier member (322), and a second sensor part (92) that is fixed to the member (222) or a further member (223) fixedly connected to the motor casing (22) and detects the second detection target portion (91).

2. The gear motor (1, 1A, 1B) according to claim 1,
wherein the first sensor part (82) and the second sensor part (92) are disposed on a same substrate (85).

3. The gear motor (1, 1A, 1B) according to claim 2,
wherein the first sensor part (82) and the second sensor part (92) are disposed on a back surface and a front surface of the same substrate (85).

4. The gear motor (1, 1A, 1B) according to claim 2 or 3,
wherein a processing part (86) that processes both detection information of the first sensor part (82) and detection information of the second sensor part (92) is disposed on the same substrate (85).

5. The gear motor (1, 1A, 1B) according to any one of claims 1 to 4, further comprising:
a sealing member (226, 362, 365, 366, 367) that seals between a space in which the second detection unit (90) is disposed and a space in which the reduction mechanism (33) is disposed.

## Patentansprüche

1. Getriebemotor (1, 1A, 1B) umfassend:
einen Motor (20, 20A, 20B); und
ein Untersetzungsgetriebe (30),
wobei das Untersetzungsgetriebe (30) einen Untersetzungsmechanismus (33) und ein Trägerelement (32), auf das durch den Untersetzungsmechanismus (33) verlangsamte Drehung übertragen wird, umfasst
das Trägerelement (32) ein erstes Trägerelement (321), das auf einer Motor-gegenüberliegenden Seite des Untersetzungsmechanismus (33) angeordnet ist, und ein zweites Trägerelement (322), das auf einer Motor-Seite des Untersetzungsmechanismus (33) angeordnet ist und mit dem ersten Trägerelement (321) verbunden ist, umfasst,
der Getriebemotor (1, 1A, 1B) eine erste Detektionseinheit (80), die eine Drehung des Motors (20, 20A, 20B) detektiert, und eine zweite Detektionseinheit (90), die eine Drehung des Trägerelements (32) detektiert, umfasst, und
die zweite Detektionseinheit (90) zwischen dem Motor (20, 20A, 20B) und dem zweiten Trägerelement (322) angeordnet ist,
**dadurch gekennzeichnet, dass**
die erste Detektionseinheit (80) einen ersten Detektionszielabschnitt (81), der sich integral mit einer Motorwelle (21) dreht, und ein erstes Sensorteil (82), das an einem Element (222), das fest mit einem Motorgehäuse (22) des Motors (20, 20A, 20B) verbunden ist, befestigt ist, und den ersten Detektionszielabschnitt (81) detektiert, umfasst, und
der erste Zielabschnitt (81) und das erste Sensorteil (82) zwischen dem Motor (20, 20A, 20B) und dem zweiten Trägerelement (322) angeordnet sind, und
die zweite Detektionseinheit (90) einen zweiten Detektionszielabschnitt (91), der sich integral mit dem zweiten Trägerelement (322) dreht, und ein zweites Sensorteil (92), das an dem Element (222) oder einem weiteren Element (223), das fest mit dem Motorgehäuse (22) verbunden ist, befestigt ist und den zweiten Detektionszielabschnitt (91) detektiert, umfasst.

2. Getriebemotor (1, 1A, 1B) nach Anspruch 1,
wobei das erste Sensorteil (82) und das zweite Sensorteil (92) auf einem selben Substrat (85) angeordnet sind.

3. Getriebemotor (1, 1A, 1B) nach Anspruch 2,
wobei das erste Sensorteil (82) und das zweite Sensorteil (92) auf einer Rückseite und einer Vorderseite desselben Substrats (85) angeordnet sind.

4. Getriebemotor (1, 1A, 1B) nach Anspruch 2 oder 3,
wobei ein Verarbeitungsteil (86), das sowohl die Detektionsinformationen des ersten Sensorteils (82) als auch Detektionsinformationen des zweiten Sensorteils (92) verarbeitet, auf demselben Substrat (85) angeordnet ist.

5. Getriebemotor (1, 1A, 1B) nach einem der Ansprüche 1 bis 4, ferner umfassend:
ein Dichtungselement (226, 362, 365, 366, 367), das zwischen einem Raum, in dem die zweite Detektionseinheit (90) angeordnet ist, und einem Raum, in dem der Untersetzungsmechanismus (33) angeordnet ist, abdichtet.

## Revendications

1. Un motoréducteur (1, 1A, 1B), comprenant :
un moteur (20, 20A, 20B) ; et
un réducteur (30),
dans lequel le réducteur (30) comprend un mécanisme de réduction (33) et un élément de support (32) auquel une rotation ralentie par le mécanisme de réduction (33) est transmise,
l'élément de support (32) comprend un premier élément de support (321) qui est disposé du côté opposé au moteur du mécanisme de réduction (33), et un deuxième élément de support (322) qui est disposé du côté du moteur du mécanisme de réduction (33) et est relié au premier élément de support (321),
le motoréducteur (1, 1A, 1B) comprend une première unité de détection (80) qui détecte une rotation du moteur (20, 20A, 20B) et une deuxième unité de détection (90) qui détecte une rotation de l'élément de support (32), et
la deuxième unité de détection (90) est disposée entre le moteur (20, 20A, 20B) et le deuxième élément de support (322),
**caractérisé en ce que**
la première unité de détection (80) comprend une première partie cible de détection (81) qui tourne de manière solidaire avec un arbre de moteur (21), et une première partie de capteur (82) qui est fixée à un élément (222) relié à demeure à un boîtier de moteur (22) du moteur (20, 20A, 20B) et détecte la première partie cible de détection (81), et
la première partie cible de détection (81) et la première partie de capteur (82) sont disposées entre le moteur (20, 20A, 20B) et le deuxième élément de support (322), et
la deuxième unité de détection (90) comprend une deuxième partie cible de détection (91) qui tourne de manière solidaire avec le deuxième élément de support (322), et une deuxième partie de capteur (92) qui est fixée à l'élément (222) ou à un élément supplémentaire (223) relié à demeure au boîtier du moteur (22) et détecte la deuxième partie cible de détection (91).

2. Le motoréducteur (1, 1A, 1B) selon la revendication 1,
dans lequel la première partie de capteur (82) et la deuxième partie de capteur (92) sont disposées sur un même substrat (85).

3. Le motoréducteur (1, 1A, 1B) selon la revendication 2,
dans lequel la première partie de capteur (82) et la deuxième partie de capteur (92) sont disposées sur une surface arrière et une surface avant du même substrat (85).

4. Le motoréducteur (1, 1A, 1B) selon la revendication 2 ou 3,
dans lequel une partie de traitement (86) qui traite à la fois des informations de détection de la première partie de capteur (82) et des informations de détection de la deuxième partie de capteur (92) est disposée sur le même substrat (85).

5. Le motoréducteur (1, 1A, 1B) selon l'une quelconque des revendications 1 à 4, comprenant en outre :
un élément d'étanchéité (226, 362, 365, 366, 367) qui assure l'étanchéité entre un espace dans lequel la deuxième unité de détection (90) est disposée et un espace dans lequel le mécanisme de réduction (33) est disposé.
